# EUROPEAN PATENT APPLICATION

(11) **EP 2 570 643 A1**
(43) Date of publication of application: **20.03.2013**
(21) Application number: 12180719.2
(22) Date of filing: 16.08.2012
(51) Int. Cl.: F02M 23/00, F02M 23/03, F02D 9/10, F16K 1/226

(54) **Air valve sealing plug**

(30) Priority: 13.09.2011 US 201113230894
(71) Applicant: Walbro Engine Management, L.L.C., Tucson Arizona 85704 (US)
(72) Inventor: Pattullo, George, M., Caro, MI Michigan 48723 (US); Schmidt, Thomas, L., Cass City, MI Michigan 48726 (US); Thomas, David L., Cass City, MI Michigan 48726 (US)
(74) Representative: Heyer, Volker

(57) **Abstract**

A seal (42) for an air valve having a valve shaft (32) rotatably carried in a bore (36) formed in a body (11) and a valve head (34) carried by the valve shaft (32) to control air flow through an air passage (14) as the valve shaft (32) is rotated. The seal (42) may include a pair of spaced apart sealing members (46) adapted to engage the body (11) within the air passage (14) to seal a junction between the valve and air passage (14). The seal may also include an intermediate member (48) between and interconnecting the sealing members (46), where the intermediate member (48) is flexible to permit movement of at least a portion of the sealing members (46) toward each other and the intermediate member (48) is also resilient to yieldably bias the sealing members (46) away from each other at least when the sealing members (46) are displaced toward each other.

## Description

### Technical Field

The present disclosure relates generally to a seal for a rotary valve through which air flows, such as an air valve in a carburetor or throttle body.

### Background

In a 2-stroke engine, stratified scavenging arrangements have been used to reduce or prevent the blow-through or loss of fuel through exhaust ports at the time of a fuel and air mixture entering the combustion chamber. Some such arrangements use an air passage that is separate from a fuel and air mixture passage, to provide a separate flow of air to the engine.

### Summary

A seal for an air valve having a valve shaft rotatably carried in a bore formed in a body and a valve head carried by the valve shaft to control air flow through an air passage as the valve shaft is rotated. The seal may include a pair of spaced apart sealing members adapted to engage the body within the air passage to seal a junction between the valve and air passage. The seal may also include an intermediate member between and interconnecting the sealing members, where the intermediate member is flexible to permit movement of at least a portion of the sealing members toward each other and the intermediate member is also resilient to yieldably bias the sealing members away from each other at least when the sealing members are displaced toward each other.

An air valve adapted to be rotatably carried by a body that has an air passage and a bore that intersects the air passage, the air valve may include a valve shaft, a valve head and a seal. The valve shaft may be adapted to be received in the bore in the body. The valve head may be coupled to the valve shaft and adapted to be received within the air passage for rotation to control air flow through the air passage. And the seal may be positioned adjacent to the valve head and have a pair of sealing members adapted to engage the body within the air passage to seal the junction areas between the bore of the valve shaft, the air passage and the valve head.

### Brief Description of the Drawings

The following detailed description of preferred embodiments and best mode will be set forth with reference to the accompanying drawings, in which:

FIG. 1 is a side view of a stratified scavenging carburetor;

FIG. 2 is a perspective view of the carburetor of FIG. 1;

FIG. 3 is a fragmentary sectional view of an air valve of the carburetor with a seal removed;

FIG. 4 is a perspective view of a seal removed from the air valve;

FIG. 5 is a plan view of the seal;

FIG. 6 is a fragmentary sectional view of the air valve like FIG. 3 and showing the seal in place on the air valve;

FIG. 7 is a fragmentary sectional view of the air valve showing the air valve in its fully open position; and

FIG. 8 is a fragmentary sectional view taken generally along line 8-8 in FIG. 6.

### Detailed Description of Presently Preferred Embodiments

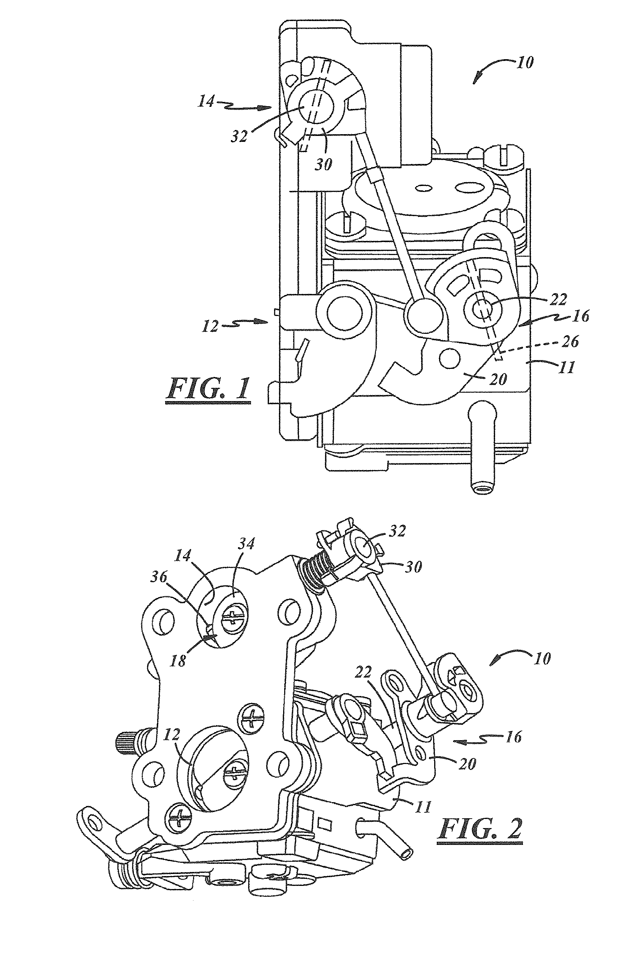

Referring in more detail to the drawings, FIGS. 1 and 2 show a carburetor 10 that may be used to supply a fuel and air mixture to an engine to support combustion in the engine. The carburetor 10 as shown is a diaphragm type carburetor having a body 11 with a main bore 12 through which a fuel and air mixture is delivered to the engine and an air passage 14 through which air is supplied to the engine. In at least one implementation, the air supplied to the engine from the air passage 14 may be used to scavenge or help remove exhaust gasses from the engine. The flow of the fuel and air mixture through the main bore 12 may be controlled, at least in part, by a throttle valve 16. And the flow of air through the air passage 14 may be controlled, at least in part, by an air valve 18. This type of carburetor 10 may be referred to as a stratified scavenging carburetor, or an air scavenging carburetor. The carburetor 10 may be constructed and may operate as disclosed in USPN 6,896,245 issued on May 24, 2005, the disclosure of which is incorporated herein by reference in its entirety.

The throttle valve 16 may include an actuating lever 20 coupled to a throttle valve shaft 22 to rotate the throttle valve shaft 22, and a throttle valve head 26 (presented in dashed lines in FIG. 1) may be carried on the valve shaft 22 and within the main bore 12. The throttle valve shaft 22 may be rotatably received in a bore that intersects the main bore 12. The throttle valve head 26, in the implementation shown, is a thin disc or butterfly-type valve head. The valve head 26 may be rotated from a first position closing or substantially closing the main bore 12 (e.g. as shown in FIG. 2) to a second position wherein the valve head 26 may be fully opened. In at least some implementations, the valve head when in its second position may be parallel, or nearly parallel, to fluid flow through the main bore. The throttle valve 16 could be of a different type and construction, as desired. By way of one nonlimiting example, the throttle valve 16 could be a rotary throttle valve such as is shown in USPN 6,394,425 or a different type of valve.

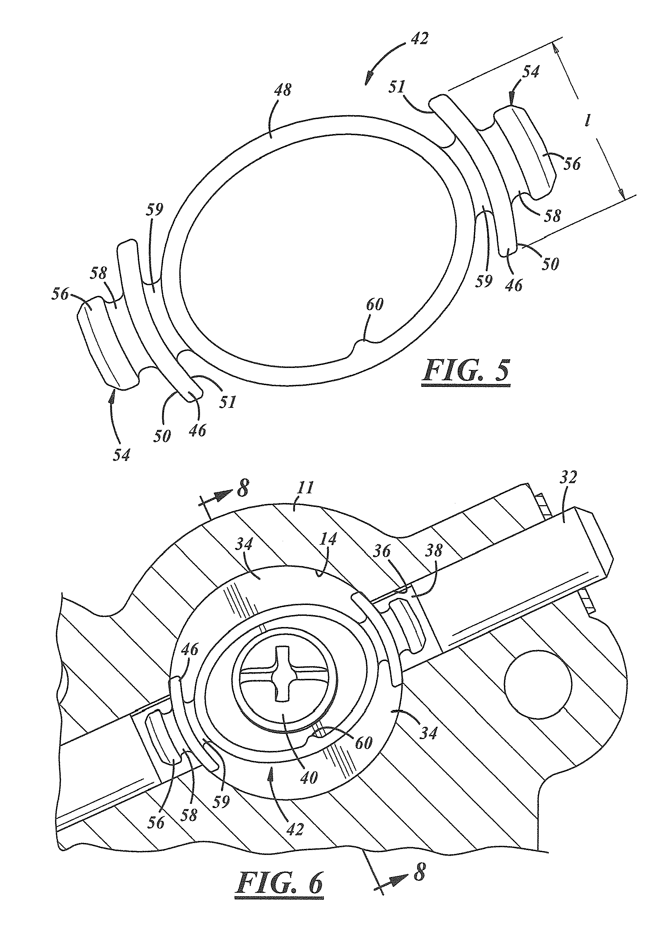

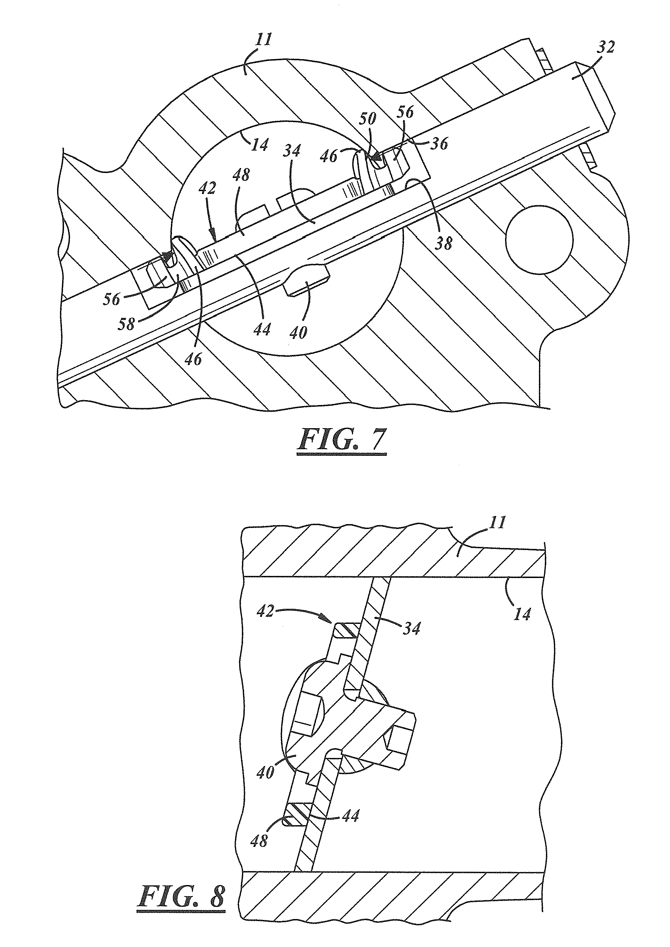

In the implementation shown, the air valve 18 is constructed similarly to the throttle valve 16. In this way, the air valve 18 may have an actuating lever 30 coupled to an air valve shaft 32 to rotate the air valve shaft 32, and an air valve head 34 may be carried on the air valve shaft 32 and at least partially within the air passage 14. The air valve shaft 32 may be rotatably received in a bore 36 that intersects the air passage 14. The air valve head 34, in the implementation shown, is a thin disc or butterfly-type valve head. The air valve head 34 may be rotated from a first position closing or substantially closing the air passage (e.g. as shown in FIGS. 6 and 8) to a second position wherein the air valve head may be fully opened (in at least some implementations, the air valve head when in its second position may be parallel, or nearly parallel, to fluid flow through the air passage as generally shown in FIG. 7).

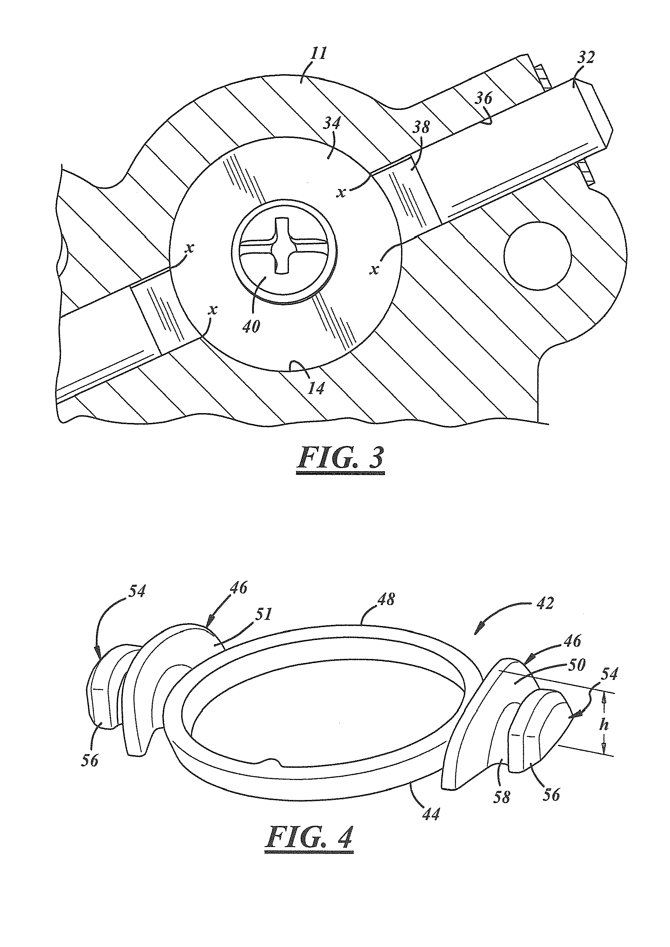

In more detail, and as shown in FIG. 3, the air valve shaft 32 may be generally cylindrical and include a flat section 38 extending in the area of the air passage 14. The flat, thin, disc-shaped air valve head 34 may be connected to the flat section 38 of the air valve shaft 32, such as by a screw 40, adhesive, weld or other connector or connection feature. The air valve head 34, in at least some implementations, may be sized to fully or at least substantially close the air passage 14. Accordingly, when the air valve 18 is in its first position, as shown in FIG. 3, the air valve fully or substantially prevents air flow through the air passage 14. This substantially limits or prevents the flow of air through the air passage 14 and to the engine to avoid leaning out the fuel and air mixture delivered to the engine during certain engine operating conditions, such as engine starting or idle engine operation.

Even when fully closed, air may leak or otherwise flow past the air valve 18 and through the air passage 14. For example, at the interface or junction points between the air valve head 34, air valve shaft 32 and air passage 14, generally labeled X in FIG. 3, air may leak through the air passage 14 and to the engine even when the air valve 18 is in its first position. At least certain engines require very low flow rates of air and fuel to support idle operation of the engine. In these engines, extra air flow through the air passage 14 may adversely affect engine operation and/or require the throttle valve 16 to have to be closed more for engine idle operation which can affect acceleration, idle stability (e.g. rollout) and come down performance of the engine. And even in engines where higher flow rates are needed to support engine operation at idle, leakage or other air flow through the air valve 18 can make calibrating engine operation more difficult. One reason for this is that the amount of air flow past the air valve 18 will be different due to variations of the size of the air valve shaft 32, air valve head 34 and air passage 14 in production runs of these components (e.g. tolerances). So, even in higher idle and low speed flow rate applications, leakage or undesired air flow past the air valve 18 may affect engine performance.

As shown in FIGS. 2 and 4-8, one or more seals 42 may be provided for the air valve 18, to seal the junction points X between the air valve shaft 32, air valve head 34 and the air passage 14. In the implementation shown, the seal 42 may be a single, unitary body with all of its features and components formed from the same piece of material. Of course, separate seals could be used for the various junction points X. The seal 42 may have a flat first face 44 adapted to be received against a face of the air valve head 34. The seal 42 may include two opposed sealing members 46 interconnected by an intermediate portion 48.

The sealing members 46 are spaced apart and are adapted to be located at diametrically opposed sides of the air valve head 34 to cover the generally diametrically opposed junctions X of the air valve head 34 and air valve shaft 32. The sealing members 46 preferably have an outer surface 50 adapted to engage the carburetor body 11 within the air passage 14 at one or more, and up to all, of the junction points X. The outer surfaces 50 may be spaced apart a distance equal to or greater than the diameter of the air passage 14 so that each outer surface 50 engages and seals against the carburetor body 11 to limit or prevent airflow therebetween. The outer surfaces 50 may be curved or arcuate and complementary in shape to the air passage 14, or at least somewhat conformable to the shape of the air passage 14. In this way, the sealing members 46 may more effectively seal or block the junction points X and accommodate variations in the size and shape of the air valve head 34, air valve shaft 32 and air passage 14. The sealing members 46 may have a height h (FIG. 4) (dimension extending away from the first face 44) and a length 1 (FIG. 5) sufficient to fully cover the portion of the bore 36 for the air valve shaft 32 that is left open to the air passage 14 due to the flat section 38 formed in the air valve shaft 32. That is, the height h of the sealing members 46 may, if desired, be equal to or greater than the maximum distance from the air valve head 34 to the opposite surface of the bore 36 for the air valve shaft 32. And the length 1 may be greater than the diameter of the bore 36 for the air valve shaft 32. In this way, the sealing members 46 may be maintained within the air passage 14 and at least substantially out of the bore 36 of the air valve shaft 32, if desired.

The seal 42 may also include one or more retention features 54, which are shown in this implementation as being located outboard of the sealing members 46. In the implementation shown, one retention feature 54 is provided outboard of each sealing member 46, providing two generally diametrically opposed retention features 54. Each retention feature 54 may include a knob 56 adapted to be at least partially received within the bore 36 for the air valve shaft 32. The retention features or knobs 56 may have a height (dimension extending away from the first face) that is slightly less than, equal to or greater than the distance from the air valve shaft 32 (and/or valve head 34) to a surface of the bore 36 of the air valve shaft 32 to maintain the seal 42 generally flat against the air valve head 34. That is, the knobs 56 may be closely received in the bore 36 but with some gap between the knob and bore, or the knobs may have an interference fit within the bore. Accordingly, in this implementation, the seal 42 may be retained in place relative to the valve head 34 and air passage 14 without a connection feature, such as a fastener or adhesive, connecting the seal 42 to the valve head 34. This facilitates relative movement between the seal 42 and valve head 34 which may facilitate rotation of the valve head and re-establishing a seal at the junction points X when the air valve is closed again, as will be explained in more detail below. A reduced thickness web 58 may interconnect the knobs 56 to their adjacent sealing members 46 to improve the flexibility of the sealing members 46. The retention features 54 could be formed from the same piece of material as the sealing members 46, as is shown, or they could be separately formed and connected to the sealing members.

To maintain the sealing members 46 a desired distance apart from each other, the seal 42 may include an intermediate portion 48. The intermediate portion 48 may extend between and interconnect the sealing members 46, and the intermediate portion 48 may be received within the air passage 14 and generally against the air valve head 34, if desired. To increase the flexibility of the seal 42, a reduced thickness and/or reduced width connecting portion 59 may be provided between the intermediate portion 48 and the sealing members 46. The intermediate portion 48 may be generally flexible and resilient, and may provide a force that yieldably biases the sealing members 46 radially outwardly into engagement with the body 11 of the carburetor 10 within the air passage 14 at least when the sealing members 46 are displaced or flexed more toward each other than they are in the at rest or uninstalled position of the seal 42. In the implementation shown, the intermediate portion 48 is thin and generally annular and in assembly, surrounds the screw 40 holding the air valve head 34 to the air valve shaft 32. Of course, the intermediate portion 48 could be differently shaped and arranged, including a solid member, a straight strip of material, a spring or other, as desired. The intermediate portion 48 could be formed from the same piece of material as the sealing members 46 and retention features 54, as is shown, or it could be a different piece of material coupled to the sealing members. Further, more than one intermediate portion 48 could be used. To facilitate proper orientation of the seal 42 within the air passage 14 and relative to the air valve 18, an indicator 60 may be provided on the seal 42. As shown, the indicator 60 includes a protrusion on the intermediate portion 48 which provides a visual indicator of the position of the seal 42 during and after installation of the seal.

Because at least a portion of the seal 42 may extend outwardly of the axis of rotation of the air valve 18, the distance between the points of engagement of the sealing members 46 and the body 11 changes as the air valve 18 is rotated between its first and second positions. As shown in FIG. 7, when the air valve 18 is rotated to its second position, the distance between the points of engagement of the sealing members 46 and the carburetor body 11 is less than when the air valve 18 is in its first position, as shown in FIG. 3. Accordingly, as the air valve 18 is rotated, at least a portion of the sealing members 46 are deflected or displaced inwardly, toward each other. This movement may be accommodated by flexing of the intermediate portion 48, by flexing of the sealing members 46, or both. When the air valve 18 rotates back toward its first position (FIG. 3), the resiliency of the intermediate portion 48 and the sealing members 46 returns the seal 42 to the position shown in FIG. 3, sealing the junction points X. Also, to facilitate the inward displacement or flexing of the sealing members 46, the sealing members 46 may be curved and the outer surfaces 50 may be generally convex and opposite inner surfaces 51 may be generally convex, if desired. The intermediate member which separates and yieldably biases the sealing members outwardly, away from each other and the retention members which are maintained within the bore help to retain the seal in position within the air passage and adjacent to the air valve without the need for any physical or other connection between the air valve and the seal. This can facilitate assembly of the seal relative to the air valve and also readily accommodate flexing or deformation of the seal that may occur as the air valve is moved between its first and second positions.

The seal 42 may be formed from any suitable material capable of providing the seal at the junction points X, durable enough for a high number of cycles, and having sufficient resiliency to return to its sealing position (as generally shown in FIG. 3) over a high number of cycles. Various polymers may be used, such as acetals like DELRIN which is suitable for use with and exposure to many liquid fuels. Of course, other materials may also be used.

While shown and described with regard to an air valve 18 of an air scavenging carburetor 10, the seal 42 may also be used in other applications. For example, the seal 42 could also be used with a throttle valve in an air throttle body such as may be used with fuel injected engine systems. In that application, the seal could limit or prevent air leakage through the junction points or areas between the throttle valve head, throttle valve shaft and throttle bore. The reduced or eliminated air leakage may make it easier to calibrate the throttle valve, and/or make calibration more accurate as the size of the leak paths at the junction points will vary from one throttle body to the next due to production tolerances and variations. The seal may make measuring and controlling airflow through a valve more consistent, reliable and easier by eliminating a source of air or fluid flow that is inconsistent and difficult to measure or determine apart from other air flow paths around or through the valve.

While the forms of the invention herein disclosed constitute presently preferred embodiments, many others are possible. It is not intended herein to mention all the possible equivalent forms or ramifications of the invention. It is understood that the terms used herein are merely descriptive, rather than limiting, and that various changes may be made without departing from the spirit or scope of the invention.

## Claims

1. A seal for an air valve having a valve shaft rotatably carried in a bore formed in a body and a valve head carried by the valve shaft to control air flow through an air passage as the valve shaft is rotated, the seal comprising:
a pair of spaced apart sealing members adapted to engage the body within the air passage to seal a junction between the valve and air passage; and
an intermediate member between and interconnecting the sealing members, where the intermediate member is flexible to permit movement of at least a portion of the sealing members toward each other and the intermediate member is also resilient to yieldably bias the sealing members away from each other at least when the sealing members are displaced toward each other.

2. The seal of claim 1 wherein the intermediate member is formed from the same piece of material as the sealing members.

3. The seal of claim 1 which also comprises at least one retaining member connected to the sealing member and adapted to be at least partially received within the bore for the air valve shaft to retain the position of the seal.

4. The seal of claim 2 wherein the intermediate member is annular and formed of a flexible and resilient material.

5. The seal of claim 1 wherein the sealing members include outer surfaces adapted to engage the body and spaced apart a distance at least equal to the diameter of the air passage.

6. The seal of claim 3 wherein the sealing members, at least one retaining member and the intermediate portion are all formed from the same piece of material.

7. An air valve adapted to be rotatably carried by a body that has an air passage and a bore that intersects the air passage, the air valve comprising:
a valve shaft adapted to be received in the bore in the body;
a valve head coupled to the valve shaft and adapted to be received within the air passage for rotation to control air flow through the air passage; and
a seal positioned adjacent to the valve head and having a pair of sealing members adapted to engage the body within the air passage to seal the junction areas between the bore of the valve shaft, the air passage and the valve head.

8. The air valve of claim 7 wherein the seal also includes an intermediate portion connected between the sealing members and providing a force yieldably biasing the sealing members away from each other at least when the sealing members are displaced toward each other from an at rest position.

9. The air valve of claim 7 wherein the seal is located adjacent to but is not directly connected to the air valve head.

10. The air valve of claim 7 wherein the seal includes at least one retention member adapted to be at least partially received in the bore for the valve shaft to retain the position of the seal within the air passage.

11. The air valve of claim 10 wherein two retention members are provided with one retention member located outboard of each sealing member.

12. The air valve of claim 10 wherein each of said at least one retention members is formed from the same piece of material as the sealing members.

13. The air valve of claim 10 wherein at least one retention member is closely received between a surface of the bore for the valve shaft and at least one of the valve head and the valve shaft.

14. The air valve of claim 8 wherein the seal includes a connecting portion that interconnects the intermediate portion and at least one sealing member.

15. The air valve of claim 14 wherein the connecting portion has a reduced thickness compared to the sealing member and intermediate portion.
